Europäisches Patentamt

(19) European Patent Office

Office européen des brevets

(11) Veröffentlichungsnummer: **0 144 638**

A2

(12) **EUROPÄISCHE PATENTANMELDUNG**

(21) Anmeldenummer: 84112401.9

(22) Anmeldetag: 15.10.84

(51) Int. Cl.⁴: **G 01 B 11/30**

(30) Priorität: 14.10.83 DE 3337468

(43) Veröffentlichungstag der Anmeldung:
19.06.85 Patentblatt 85/25

(84) Benannte Vertragsstaaten:
AT CH DE FR GB LI NL SE

(71) Anmelder: Optische Werke G. Rodenstock
Isartalstrasse 43
D-8000 München 5(DE)

(72) Erfinder: Brodmann, Rainer, Dr.
Jagdfeldring 72
D-8013 Haar(DE)

(74) Vertreter: Schiller, Walter, Dr.
Kanzlei Münich & Schiller Willibaldstrasse 36
D-8000 München 21(DE)

(54) **Verfahren und Vorrichtung zu Prüfung der Oberfläche von Bauteilen.**

(57) Beschrieben wird ein Verfahren und eine Vorrichtung zur berührungslosen Prüfung der Oberfläche von Bauteilen mit Licht. Das erfindungsgemäße Verfahren bzw. die erfindungsgemäße Vorrichtung zeichnet sich dadurch aus, daß das reflektierte Licht nicht nur zur Prüfungs der Oberfläche, sondern auch zum Erkennen des Beginns und des Endes der zu untersuchenden Oberfläche verwendet wird und ein der Intensität des reflektierten Lichts entsprechendes Signal den Meßvorgang steuert.

Fig. 2

EP 0 144 638 A2

Beschreibung

Die Erfindung bezieht sich auf ein Verfahren bzw. eine Vorrichtung zur Prüfung der Oberfläche von Bauteilen gemäß dem Oberbegriff des Patentanspruchs 1 bzw. 3.

Derartige Verfahren bzw. Vorrichtungen sind beispielsweise aus der DE-PS 26 13 978, der DE-OS 28 20 910 oder der DE-OS 30 37 622 bekannt.

Die aus der DE-PS 26 13 978 bekannte Vorrichtung dient zum Kontrollieren der Oberflächengüte eines lichtreflektierenden, insbesondere band- oder bahnförmigen Werkstücks auf Oberflächenfehler, wie Kratzer etc.. Hierzu wird das Werkstück mit Licht beleuchtet, und das reflektierte Licht bei einem Ausführungsbeispiel von mehreren Detektoren gemessen. Aus den Ausgangssignalen der Detektoren wird mittels einer Auswerteschaltung eine Aussage über Fehler in der zu untersuchenden Oberfläche gewonnen.

Aus den weiterhin genannten DE-OS 28 20 910 und DE-OS 30 37 622 sind Verfahren bzw. Vorrichtungen zur Ermittlung der Oberflächenstruktur und insbesondere der Rauheit bekannt. Bei diesen Verfahren bzw. Vorrichtungen tastet ein Lichtstrahl die zu untersuchende Oberfläche ab. Mittels eines Detektorarrays, beispielsweise einer Diodenzeile wird die Winkelverteilung des reflektierten Lichts für Winkel um den Reflexionswinkel der idealen Oberfläche gemessen und aus dieser Winkelverteilung die Oberflächenstruktur und insbesondere gemäß der DE-OS 30 37 622 integrale Kenngrößen für die Rauheit ermittelt.

Den in den vorstehend genannten Druckschriften beschriebenen Verfahren bzw. Vorrichtungen ist gemeinsam, daß sie

- 5 - 0144638

keine genaue Zuordnung des Meßsignals zur geometrischen Gestalt der zu untersuchenden Oberfläche ohne zusätzliche Maßnahmen erlauben. Entweder wird (DE-PS 26 13 978) von der Untersuchung eines band- oder bahnförmigen Werkstücks ausgegangen, bei der eine Zuordnung des Meßsignals zu einem bestimmten Streifen der Oberfläche quer zur Vorschubrichtung über den (implizit als konstant vorausgesetzten) Vorschub des Werkstücks erfolgt, oder es wird auf eine derartige Zuordnung überhaupt nicht eingegangen (DE-OS 28 20 910 bzw. DE-OS 30 37 622). Aus der US-PS 4 140 397 und den DE-OSen 32 37 818 und 30 21 072 sind Verfahren anderer Gattung bekannt. Bei diesen Verfahren werden Aussagen über den Oberflächenzustand der zu untersuchenden Oberfläche lediglich als Ja/Nein-Information gewonnen. Dieses Ja/ Nein-Signal kann auch dazu dienen, Aussagen darüber zu erhalten, ob der Meßstrahl die zu untersuchende Oberfläche trifft.

Der Erfindung liegt die Aufgabe zugrunde, ein Verfahren bzw. eine Vorrichtung gemäß dem Oberbegriff der Patentansprüche 1 bzw. 3 derart weiterzubilden, daß eine einfache Zuordnung des Meßergebnisses zu bestimmten Bereichen der untersuchten Oberfläche möglich ist.

Diese Aufgabe wird erfindungsgemäß durch die im kennzeichnenden Teil der Patentansprüche 1 bzw. 3 angegebenen Merkmale gelöst. Erfindungsgemäß wird das von dem Detektorarray empfangene Meßsignal auch als Erkennungssignal für den Beginn bzw. das Ende der zu untersuchenden Oberfläche verwendet und mit diesem Signal der Meßvorgang gesteuert. Hierdurch ist keine Synchronisierung zwischen Meßwertaufnahme und Zuführung bzw. Abtastung der zu untersuchenden Oberfläche erforderlich. Durch die Zuordnung der Intensität des an der Oberfläche reflektierten Lichts zur geometrischen Gestalt der Oberfläche ist es vielmehr jederzeit möglich, beispielsweise den Ort eines Oberflächenfehlers zu bestimmen. Ferner ist es auch möglich, einen bestimmten Teil der Oberfläche des zu prüfenden Körpers für die Messung auszuwählen. Dieser erfindungsgemäße Grundgedanke erlaubt insbesondere die Serienprüfung von Bauteilen. Die Bauteile werden beispielsweise nacheinander durch den Meß-Lichtstrahl hindurchbewegt. Aus der Intensität des reflektierten Lichts ist es in Zuordnung zur geometrischen Gestalt des zu untersuchenden Bauteils und der zu untersuchenden Oberfläche möglich, den Beginn bzw. das Ende der zu untersuchenden Oberfläche zu erkennen, so daß auch in diesem Falle keine Synchronisierung zwischen Meßwertaufnahme und Zuführung erforderlich ist. Damit können die zu untersuchenden Bauteile auch in unregelmäßigen Abständen und mit einer gewissen Lageungenauigkeit der Meßvorrichtung zugeführt werden.

In den Ansprüchen 5 und 6 sind Möglichkeiten angegeben, wie aus den Ausgangssignalen der Detektoren des Detektorarrays das Intensitätssignal gewonnen werden kann, anhand dessen die Zuführung einer zu untersuchenden Oberfläche in den Meßlichtstrahl festgestellt werden kann.

Dabei ist es gemäß Anspruch 7 vorteilhaft, wenn die Detektoren Photodioden sind.

Die in Anspruch 8 gekennzeichnete kontinuierliche Zuführung von Bauteilen ist insbesondere dann günstig, wenn die Abmessungen der zu untersuchenden Oberfläche quer zur Vorschubrichtung so klein sind, daß sie in etwa dem Durchmesser des Meß-Lichtstrahls entsprechen und somit der Meß-Lichtstrahl die zu untersuchende Oberfläche nicht quer zur Vorschubrichtung abtasten muß. In diesem Falle ist es möglich, ein lineares Detektorarray, d.h. eine Detektorreihe zu verwenden, die die Winkelverteilung des an der Oberfläche reflektierten Lichts senkrecht zur Vorschubrichtung mißt.

Bei der Serienprüfung von Bauteilen, die von einer Zuführeinrichtung nacheinander in den Bereich des Lichtstrahls zugeführt werden, ist es besonders vorteilhaft, wenn das verwendete Verfahren zur Ermittlung der Oberflächenstruktur und insbesondere zur Ermittlung der Rauheit eine große Schärfentiefe hat, da dann Schwankungen im Abstand des Sensors der Vorrichtung zur zu untersuchenden Oberfläche hingenommen werden können. Zwei Vorrichtungen mit großer Schärfentiefe sind in den Ansprüchen 9 und 10 gekennzeichnet.

Die Erfindung wird nachstehend anhand eines Ausführungsbeispiels unter Bezugnahme auf die Zeichnung näher beschrieben, in der zeigt:

Fig. 1 den Prinzipaufbau einer Vorrichtung zur Serienprüfung von Bauteilen,

Fig. 2 die Zuordnung des Intensitätssignals zur geometrischen Gestalt der geprüften Bauteile,

Fig. 3 den Aufbau eines Sensors, und

Fig. 4 den Aufbau eines weiteren Sensors.

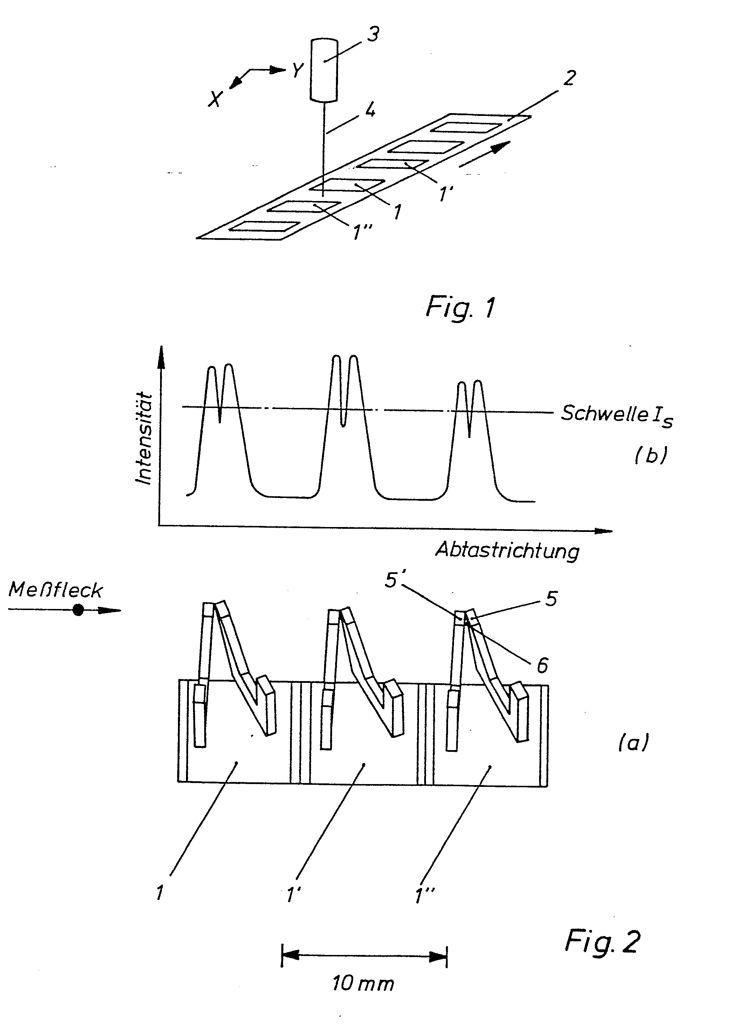

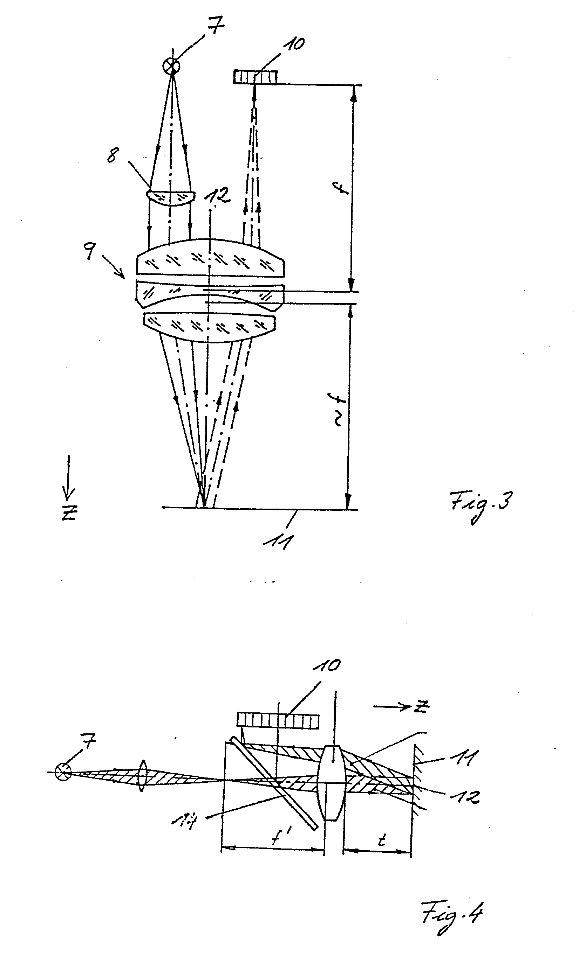

Fig. 1 zeigt den prinzipiellen Aufbau einer Vorrichtung zur Serienprüfung von Bauteilen. Die zu untersuchenden Bauteile 1, 1', 1'' ... befinden sich auf einer Zuführeinrichtung 2, die sie einem Sensor 3 einer Vorrichtung zur optischen Oberflächenprüfung zuführt. Der Sensor 3 richtet einen Lichtstrahl 4 auf das zu untersuchende Bauteil und mißt mit einem Detektorarray die Verteilung des reflektierten Lichts. (Siehe hierzu im einzelnen die Fig. 3 und 4). Mit einer nicht dargestellten Auswerteschaltung werden aus der Verteilung des reflektierten Lichts Aussagen über die Oberflächenstruktur ermittelt.

Der Sensor 3 kann die zu untersuchenden Oberflächen in x- und y-Richtung abtasten, wobei das gerade untersuchte Bauteil 1 nicht bewegt wird. In gleicher Weise kann das Bauteil 1 gegenüber dem Sensor zur Abtastung der zu untersuchenden Oberfläche bewegt werden.

Wenn jedoch die Ausdehnung der zu untersuchenden Oberfläche in y-Richtung in etwa dem Durchmesser des auf die zu untersuchende Oberfläche gerichteten Lichtstrahls entspricht, ist es möglich, die zu untersuchenden Bauteile 1, 1', 1'' kontinuierlich mittels der Zuführeinrichtung 2 unter dem Sensor 3 hindurch zu transportieren.

Fig. 2 zeigt ein Beispiel für zu untersuchende Bauteile 1, bei denen die Prüfung der zu untersuchenden Oberfläche mit einem kontinuierlichen Vorschub erfolgt.

In Fig. 2a sind mehrere Tonkopfhälften 1, 1', 1'' für Tonköpfe von Tonbandgeräten dargestellt, die sich auf einer nicht im einzelnen erkennbaren Zuführeinrichtung 2 befinden.

Moderne Tonköpfe haben eine Spaltbreite von 1,5 µm. Die beiden Flächen 5 und 5', die den Spalt 6 begrenzen, müssen besonders genau bearbeitet werden, da die Abstandsänderung aufgrund der Rauhtiefe nur um maximal 10% der Spaltbreite von 1,5 µm schwanken darf.

Ferner werden an die Flächen des Tonkopfs, die mit dem Band direkten Kontakt haben, ebenfalls hohe Anforderungen gestellt, da eine zu große Rauhtiefe die Tonqualität sowie den Verschleiß des Bandes negativ beeinflussen würde. Deshalb wird eine Rauhtiefe von weniger als 0,1 µm angestrebt.

Bei dem gezeigten Ausführungsbeispiel sind die Spaltflächen, die den Spalt begrenzen, etwa 0,5 x 0,8 mm groß, der Durchmesser des Meßflecks des optischen Rauheitsmeßgeräts beträgt 0,3 mm.

In Fig. 2b ist der Intensitätsverlauf dargestellt, den man als Ausgangssignal des Sensors erhält, wenn die geschliffenen Tonkopfhälften unter dem Sensor durchbewegt werden. Eine Synchronisierschaltung, die im einzelnen nicht dargestellt ist, wertet die Intensität des reflektierten Lichts aus und steuert die Auswerteschaltung derart, daß die Auswerteschaltung Kennwerte für die Rauhigkeit der unter dem Sensor hindurchbewegten Oberflächen nur dann ermittelt, wenn die Intensitätsspitzen auftreten, die den geschliffenen Tonkopfflächen 5 und 5' entsprechen. Damit wird mit einem der Intensität des reflektierten Lichts entsprechenden Signal der eigentliche Meßvorgang gesteuert.

Die Auswerteschaltung und die Synchronisierschaltung können in beliebiger Weise, beispielsweise in Form von festverdrahteten Logikschaltungen aufgebaut sein. Besonders vorteilhaft ist es, wenn ein Mikrocomputer verwendet wird, der aufgrund seines Ablaufprogramms die Funktion sowohl der Auswerteschaltung als auch der Synchronisierschaltung übernimmt.

Fig. 3 zeigt den Aufbau eines Sensors, der eine große Schärfentiefe hat und damit große Lageschwankungen der zu untersuchenden Oberflächen in Richtung der z-Achse zuläßt. Der nur schematisch dargestellte Sensor weist eine Lichtquelle 7, einen Kollimator 8, ein Meßobjektiv 9 und eine Diodenzeile 10 auf.

Eine zu untersuchende Oberfläche 11 hat von dem Sensor, d.h. von der vorderen Hauptebene des Meßobjektivs 9, einen Abstand, der in etwa der Brennweite f des Meßobjektivs 3 entspricht.

Das von der Lichtquelle 7, beispielsweise einer Laserdiode, ausgehende Licht, wird von dem Kollimator 8 parallelisiert und trifft außerhalb der optischen Achse 12 des Meßobjektivs 9 auf dieses auf. Der parallele Lichtstrahl wird von dem Meßobjektiv 9 auf der Probenoberfläche 11 fokussiert.

Das reflektierte Lichtbündel, das eine der Rauheit der Oberfläche 4 entsprechende Winkelverteilung um den sogenannten Glanzwinkel hat, geht ebenfalls durch das Meßobjektiv 9 hindurch und wird von diesem parallelisiert. Das nunmehr parallele Lichtbündel trifft auf die Diodenzeile 5 auf, die in der hinteren Brennebene des Meßobjektivs liegt, und deren Achse senkrecht auf der Zeichenebene steht.
An Proben unter gleichem Winkel gestreute Lichtbündel werden auf eine diesem Winkel eindeutig zugeordnete Stelle auf der Diodenzeile fokussiert. Da die Diodenzeile in der Brennebene des Meßobjektivs liegt, ändert sich die Zuordnung zwischen dem unter einem bestimmten Winkel (Raumwinkel) reflektierten Licht und den einzelnen Dioden der Diodenzeile 10 auch bei größeren Änderungen des Abstandes "Meßobjektiv 9 / Probenoberfläche 11" praktisch nicht, anders ausgedrückt, bilden das Meßobjektiv 9 und die Diodenzeile 10 ein Fouriersystem.

In der Praxis hat es sich herausgestellt, daß Abstandsänderungen bis zu ± 30% keinen nennenswerten Einfluß auf die Ermittlung der Oberflächenstruktur haben.

Der Leuchtfleckdurchmesser auf der Probenoberfläche ist typischerweise 2 mm. Die spezielle Eigenschaft des in Fig. 3 dargestellten Sensors - die strenge Zuordnung zwischen Reflexionswinkel und Meßelement (Diode) der Diodenzeile - ermöglicht jedoch eine Variation des Leuchtfleckdurchmessers in weiten Grenzen. Beispielsweise kann durch Änderung der Brennweite des Kollimators von 5 mm bis 30 mm und/oder der Art der Lichtquelle 1 der Leuchtfleckdurchmesser zwischen 5 µm und 4 mm geändert werden, so daß auch kleinste und relativ große Meßobjekte erfaßt werden können. Dies wird durch den telezentrischen Strahlengang zwischen Kollimator 8 und Meßobjektiv 3 möglich.

Als Lichtquellen 7 können Laserdioden, Leuchtdioden, Glühlämpchen oder dgl. verwendet werden. Auch ist es möglich, die Lichtquelle 7 und den Kollimator 8 durch einen Laser zu ersetzen.

Natürlich kann auch mit Licht außerhalb des sichtbaren Bereichs gearbeitet werden. Ferner kann die Diodenzeile 10 auch ein Detektorenfeld, wie ein Diodenfeld oder ein Phototransistorenfeld sein. Ein derartiges Licht-Detektorenfeld erlaubt die sofortige Bestimmung einer flächenhaften Streulichtverteilung. Daneben ist es bei Verwendung einer zeilenförmigen Detektoranordnung möglich, diese zur Bestimmung der flächenhaften Streulichtverteilung zu drehen.

Fig. 4 zeigt einen weiteren Sensor, der aufgrund seiner großen Schärfentiefe in besonders vorteilhafter Weise bei der erfindungsgemäßen Vorrichtung verwendet werden kann.

Das Licht einer Lichtquelle 7 wird von einem Objektiv 13 auf den hinteren Brennpunkt eines Meßobjektivs 9 fokussiert und trifft parallelisiert annähernd senkrecht auf die zu untersuchende Oberfläche 11 auf.

Das mit einer bestimmten Winkelverteilung rückgestreute Licht geht ebenfalls durch das Meßobjektiv 9 hindurch und wird von einem teildurchlässigen Spiegel 14 auf eine Diodenzeile 10 umgelenkt. Die Diodenzeile 10 hat von dem Meßobjektiv 9 einen Abstand, der der Brennweite f' des Meßobjektivs entspricht. Damit bilden die Diodenzeile 10 und das Meßobjektiv 9 ebenfalls ein Fouriersystem.

Aufgrund dessen ist eine eindeutige Winkel-Strecken-Zuordnung zwischen dem unter einem bestimmten Winkel rückgestreuten Licht und der Lage dieses Lichtes auf der Diodenzeile möglich. Diese eindeutige Zuordnung bleibt auch bei relativ großen Änderungen des Abstandes t der zu untersuchenden Oberfläche 11 von dem Meßobjektiv 9 erhalten.

In gleicher Weise wie bei dem in Fig. 3 dargestellten Sensor ist es auch bei diesem Sensor möglich, unterschiedliche Lichtquellen 7 und/oder Detektorenfelder anstelle von Diodenzeilen zu verwenden.

Durch Variation der Konstruktionsdaten sowie der verwendeten Lichtquellen können Meßfleckdurchmesser zwischen weniger als 1 mm und 10 mm realisiert werden.

Die Ausgangssignale der Diodenzeilen bzw. der Detektorenfelder können in praktisch beliebiger Weise zur Ermittlung von Kenngrößen für die Oberflächenstruktur und insbesondere für die Rauheit ausgewertet werden. Insbesondere ist es ohne weiteres möglich, eine Auswerteschaltung zu verwenden, die integrale Kennwerte für die Rauheit liefert, wie sie beispielsweise in der DE-OS 30 37 622 beschrieben sind. Gemäß dieser Druckschrift wertet die Auswerteschaltung die Ausgangssignale der Meßelemente nach den folgenden Gleichungen

$$S_x = \sum_{i=1}^{n} |w_i - \overline{w}|^x \cdot p_i ; \quad x = 1 \text{ oder } 2 \quad (a)$$

$$w = \sum_{i=1}^{n} w_i \cdot p_i \quad (b)$$

$$p_i = \frac{p_i \cdot g_i}{\sum_{i=1}^{n} p_i \cdot g_i} \quad (c)$$

zur Ermittlung von Kenngrößen für die Rauheit aus, wobei

$w_i$ der von dem jeweiligen Meßelement erfaßte Winkel der Streustrahlung

n die Anzahl der zur Auswertung herangezogenen Detektoren (Dioden),

$\bar{w}$ der Mittelwert aus den Werten $p_i$ und $w_i$

$p_i$ das nach Gleichung c) nomierte Meßsignal $D_i$, und

$g_i$ Korrekturfaktoren für das Meßsignal $D_i$ sind.

Natürlich ist es auch möglich, die Ausgangssignale des Detektorarrays in anderer Weise zur Ermittlung der Rauheit auszuwerten.

Ferner können die Ausgangssignale bei gegebenenfalls anderem optischen Aufbau auch zur Ermittlung anderer die Oberfläche kennzeichnender Größen ausgewertet werden. Beispielsweise ist es auch möglich, in ähnlicher Weise wie z.B. in der DE-PS 26 13 978 beschrieben, Oberflächenfehler bei der Serienprüfung von Bauteilen festzustellen.

Vorstehend ist ein Verfahren und eine Vorrichtung zur berührungslosen Prüfung der Oberfläche von Bauteilen mit Licht beschrieben worden. Das erfindungsgemäße Verfahren bzw. die erfindungsgemäße Vorrichtung zeichnet sich dadurch aus, daß das reflektierte Licht nicht nur zur Prüfung der Oberfläche, sondern auch zum Erkennen des Beginns und desEndes der zu untersuchenden Oberfläche verwendet wird und ein der Intensität des reflektierten Lichts entsprechendes Signal den Meßvorgang steuert.

KANZLEI

MÜNICH & SCHILLER

DIPL.-PHYSIKER
DR. WILHELM MÜNICH PATENTANWALT
DR. WALTER SCHILLER RECHTSANWALT

WILLIBALDSTR. 36 · D 8000 MÜNCHEN 21          TEL.: 089/580 80 49 · TELEX: 528464 W MUEN D

UNSER ZEICHEN:

Optische Werke G. Rodenstock

Isartalstr. 43
D-8000 München 5

_____

Verfahren und Vorrichtung zur Prüfung der Oberfläche von Bauteilen

_____


Patentansprüche


1. Verfahren zur Prüfung der Oberfläche von Bauteilen, bei
dem ein Lichtstrahl auf eine zu untersuchende Oberfläche
gerichtet wird, und die Verteilung des reflektierten Lichts
zur Bestimmung der Oberflächenstruktur gemessen wird,
dadurch g e k e n n z e i c h n e t, daß die Intensität
des reflektierten Lichts zum Erkennen des Beginns und des
Endes der zu untersuchenden Oberfläche verwendet wird und
das Intensitätssignal den Meßvorgang steuert.

2. Verfahren nach Anspruch 1,
dadurch g e k e n n z e i c h n e t, daß zur Serienprüfung die Bauteile nacheinander in den Bereich des Lichtstrahls zugeführt werden.

3. Vorrichtung zur Prüfung der Oberfläche von Bauteilen (1),
bei der ein Meß-Lichtstrahl (4) eine zu untersuchende Ober-

BANKVERBINDUNG: KREISSPARKASSE MÜNCHEN (BLZ 702 501 50) 80 6174

STADTSPARKASSE MÜNCHEN (BLZ 701 500 00) 3·125514 · POSTSCHECKAMT MÜNCHEN 15050x-809

fläche abtastet (5, 5'; 11), ein Detektorarray (10) die ein- oder zweidimensionale Intensitätsverteilung des an der Oberfläche reflektierten Lichts mißt, und eine Auswerteschaltung hieraus Kenngrößen für die Oberflächenstruktur ermittelt,
dadurch g e k e n n z e i c h n e t, daß eine Synchronisierschaltung die Intensität des reflektierten Lichts aus den Ausgangssignalen des Detektorarrays (10) bestimmt und entsprechend dem der geometrischen Gestalt des zu untersuchenden Bauteils (1) zugeordneten zeitlichen Intensitätsverlaufs den Meßvorgang steuert.

4. Vorrichtung nach Anspruch 3,
dadurch g e k e n n z e i c h n e t, daß zur Serienprüfung von Bauteilen eine Zuführeinrichtung (2) die Bauteile nacheinander in den Bereich des Lichtstrahls (4) zuführt.

5. Vorrichtung nach Anspruch 3 oder 4,
dadurch g e k e n n z e i c h n e t, daß die Synchronisierschaltung zur Ermittlung des zeitlichen Intensitätsverlaufs die Ausgangssignale aller Detektoren des Detektorarrays (10) summiert.

6. Vorrichtung nach Anspruch 3 oder 4,
dadurch g e k e n n z e i c h n e t, daß die Synchronisierschaltung zur Ermittlung des zeitlichen Intensitätsverlaufs das Ausgangssignal des zentralen Detektors heranzieht.

7. Vorrichtung nach einem der Ansprüche 3 bis 6,
dadurch g e k e n n z e i c h n e t, daß die Detektoren des Detektorarrays (10) Photodioden sind.

8. Vorrichtung nach einem der Ansprüche 3 bis 7,
dadurch g e k e n n z e i c h n e t, daß bei der Serienprüfung von Bauteilen (1) die Bauteile kontinuierlich in

den Bereich des Meßlichtstrahls (4) mit einer Zuführeinrichtung (2) zuführbar sind.

9. Vorrichtung nach einem der Ansprüche 3 bis 8, dadurch g e k e n n z e i c h n e t, daß ein Abbildungs-Linsensystem (9), dessen Abstand von der zu untersuchenden Oberfläche näherungsweise gleich der Brennweite (f) des Abbildungs-Linsensystems ist, ein paralleles Strahlenbündel auf die Oberfläche (11) fokussiert, daß die Achse des fokussierten Strahlenbündels mit der Flächennormale der Oberfläche einen Winkel ungleich Null einschließt und daß ein Linsensystem (9) das von der Oberfläche (11) reflektierte Strahlenbündel auf das Detektorarray (10) abbildet, dessen Abstand von dem Linsensystem in etwa gleich der Brennweite (f) des Linsensystems (9) ist.

10. Vorrichtung nach einem der Ansprüche 3 bis 8, dadurch g e k e n n z e i c h n e t, daß ein Abbildungs-Linsensystem (9) ein paralleles Strahlenbündel in etwa senkrecht auf die zu untersuchende Oberfläche (11) richtet und den reflektierten Lichtstrahl über einen Strahlenteiler (14) auf ein Detektorarray (10) fokussiert, dessen Abstand von dem Linsensystem (9) in etwa gleich der Brennweite (f) des Linsensystems (9) ist.

0144638

*Fig. 1*

Schwelle $I_S$

(b)

Meßfleck

5'
5
6

(a)

10 mm

*Fig. 2*

2/2

Fig.3

Fig.4